# EUROPEAN PATENT APPLICATION

(11) **EP 2 244 066 A1**
(43) Date of publication of application: **27.10.2010**
(21) Application number: 09305337.9
(22) Date of filing: 21.04.2009
(51) Int. Cl.: G01D 4/00, H04L 29/08, H04L 29/06

(54) **Method and system for transferring information, as well as a master device, a slave device and a central instance for such system**

(71) Applicant: Alcatel Lucent, 75008 Paris (FR)
(72) Inventor: Weytens, Inez, 2288, Bouwel (BE); Pollet, Thierry, 2800, Mechelen (BE); Wambecq, Albert, 3010, Kessel-Lo (BE); Kopp, Dieter, 75428, Illingen (DE); Heikens, Heico, 2060, Antwerp (BE)
(74) Representative: Brose, Gerhard

(57) **Abstract**

The invention relates to a method for transferring information, especially control commands or operational data, between a master device and a slave device, especially the central station (CS) of a public utility company (PUV) and an access device (AD1, AD2, AD3; AD) of a consumer (C1, C2, C3), wherein transferring information is performed with the aid of a publicly accessible communications network (PCN), that registration of the slave device (AD1, AD2, AD3; AD) with a central instance (C1) precede the transfer of information, and that the access of the master to the slave or of the slave to the master is performed with the aid of the central instance (C1) or based on information got from the central instance (C1). The invention further relates to a system, a master device (CS), a slave device (AD1, AD2, AD3; AD), and a central instance (C1).

## Description

The invention relates to a method for transferring information according to the preamble of claim 1, to a system for transferring information according to the preamble of claim 6, to a master device according to the preamble of claim 7, to a slave device according to the preamble of claim 8, and to a central instance according to the preamble of claim 9.

A major problem of public utility companies is the read out of the meter readings for electricity, gas, or water. The service of gas meter readers is since long an unwanted solution to this problem. This problem further increases nowadays, where public utility companies no longer do have their closed service areas, but where one and the same supply network commonly supplies customers of different public utility companies. This also allows a customer to be placed faraway of his supplying public utility company. Here also the term "Smart Grid" is being used. Smart metering is an appreciated new technique in this field. The meters are foreseen with means to provide the meter readings in digital electric form and the consumers' premises are foreseen with access devices to make such meter readings of one or more such meters accessible to the respective public utility company. Conversely the meters can be accessed to cause the transfer of the available meter readings, and moreover also to take actions like cutting off the consumption or surveying the meters.

For the transfer of information between access devices in the consumers' premises and a server of the public utility company various possibilities are known.

A major problem in this field is to have a secure communication between the public utility company and the access devices.

The problem is solved according to the invention by a method according to the teaching of claim 1, by a system according to the teaching of claim 6, by a master device according to the teaching of claim 7, by a slave device according to the teaching of claim 8, and by a central instance according to the teaching of claim 9.

The problem underlying the invention is well known in the field of telephony over the Internet, called voice over IP, or VoIP. The idea is to use the same principles also in the present case dealing with smart metering.

Further embodiments of the invention are to be found in the subclaims and in the accompanying description.

The problem arose in the field of smart metering and the solution is being described in terms of such application, but the invention can be used also in other kinds of transferring information between a master device and slave devices.

In the following the invention will be described with the aid of the accompanying drawings, in which:
- Figure 1: shows prior art solutions of public utility companies' systems for remotely reading the meters in their consumers' premises.
- Figure 2: shows a public utility company's system for remotely reading the meters in its consumers' premises as an example of a system for transferring information, according to the invention with devices according to the invention, where the method according to the in- vention can be carried out.
- Figure 3: shows some typical sequences in a method for transferring information according to the invention.
- Figure 4: shows a further sequence of messages in a method for transferring information according to the invention.

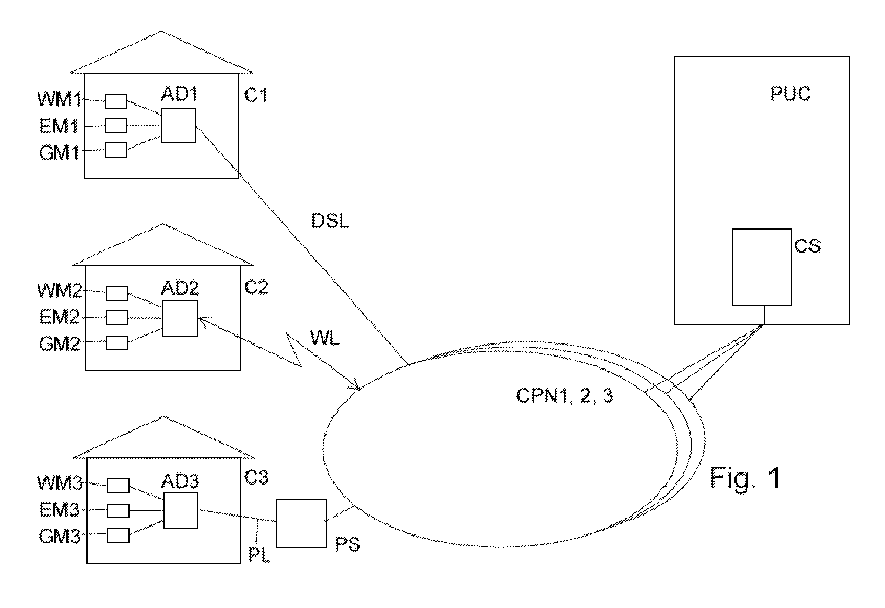

Based on figure 1 showing a known example of a public utility company's system for remotely reading the meters in its consumers' premises, the starting point of this invention is described.

The drawing shows premises of three consumers C1, C2, and C3, three closed private networks CPN1, CPN2, and CPN3, a central station CS of a public utility company PUC. Each premises of a consumer C1, C2, and C3 houses an access device AD1, AD2, and AD3, respectively, to which a water meter WM1, WM2, and WM3, respectively, an electric meter EM1, EM2, and EM3, respectively, and a gas meter GM1, GM2, and GM3, respectively, are connected. The premises of the consumers C1, C2, and C3 are connected to the closed private networks CPN1, CPN2, and CPN3 by digital subscriber lines DSL, a wireless local area network WL, and, via a power station PS, power lines PL. The closed private networks CPN1, CPN2, and CPN3 are connected to the central station CS of the public utility company PUC via connections not further specified. Also the closed private networks CPN1, CPN2, and CPN3 are not further specified.

### Actually we have three different examples in this figure 1:

The premises of the consumer C1 represent a couple of like premises of further such consumers. Each such consumer C1 houses an access device AD1, to which a water meter WM1, an electric meter EM1, and a gas meter GM1 are connected. These three meters are the most common ones in a household, but also other combination of meters, like two meters of the same kind, but different tariff for different times, a meter for distant heating or only a single meter may be foreseen. All such consumers C1 are connected via normal telephone or data channels over digital subscriber lines DSL and the closed private network CPN1 to the central station CS of the public utility company PUC.

An other example in this figure 1 is identical in showing the premises of the consumer C2 representing a couple of like premises of further such consumers, each housing an access device AD2, to which a water meter WM2, an electric meter EM2, and a gas meter GM2 are connected, and the central station CS of the public utility company PUC. This example differs in the connection between the consumers C2 and the central station CS. Here a wireless local area network WL is acting as access to the closed private network CPN2.

Also the third example in this figure 1 only differs in the connection between the consumers C3 and the central station CS. Here the power lines PL are used to also provide the communication between the access devices AD3 and the central station CS via the closed private network CPN3.

Building up and maintaining such closed private networks indeed is secure, but it is costly and therefore there was a need to find a solution that is as secure as a private network but without the need to continuously uphold connections between all customers and the public utility company.

The information flow in such applications mostly is a discontinuous one. Therefore at first glance the use of the Internet is advisable. But as the Internet is an unsafe medium, the use of firewalls is highly recommended. Firewalls however hinder the easy polling of slaves by a master or the contacting of the master by a slave.

This problem however is more or less the same as with the Internet telephony, known as voice over IP or VoIP. A solution similar to the well-known Session Initiation Protocol, SIP, therefor is used also in this application.

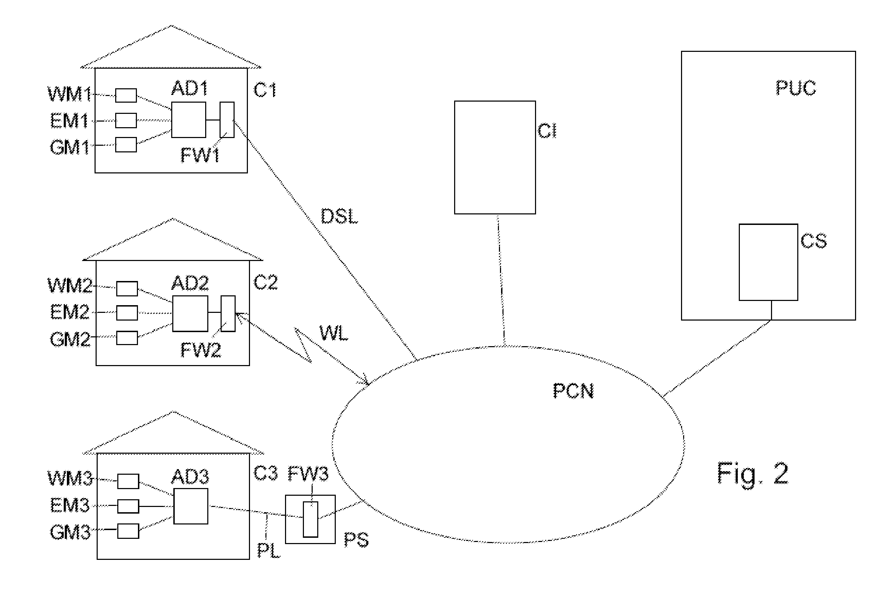

Figure 2 shows a public utility company's system for remotely reading the meters in its consumers' premises. The closed private networks CPN1, CPN2, and CPN3 have been replaced by a public communications' network, PCN, actually a part of the sole worldwide telecommunications' network.

Between this network CPN and each access device AD1, and AD2 of each consumer C1, and C2 a firewall FW1, and FW2, respectively, is placed. In this example consumer C3, representing a couple of consumers, all being connected to the same power station PS, does not need an own firewall, but all such consumers C3 use a common firewall FW3 situated at the power station PS, where the junction to the public communications' network, PCN, takes place. Instead or even in addition thereto the individual consumers C3 might have their own firewalls.

The connections between the consumers' access devices AD1, and AD2, and the power station PS to the public communications' network, PCN, is the same as was in the example of figure 1.

In addition there is shown a central instance CI as an adjunct to the public communications' network, PCN. This central instance practically is a SIP registrar and a SIP proxy or most often a group of SIP registrars and SIP proxies. In the claims the SIP registrar is considered to be a part of the SIP proxy.

Each access device AD1, and AD2, or each firewall FW1, and FW2, and the firewall FW3, at first start of operation and after each interruption registers with the central instance CI and afterwards can be accessed by the central station of the public utility company PUC via this central instance CI or based on information got from this central instance CI.

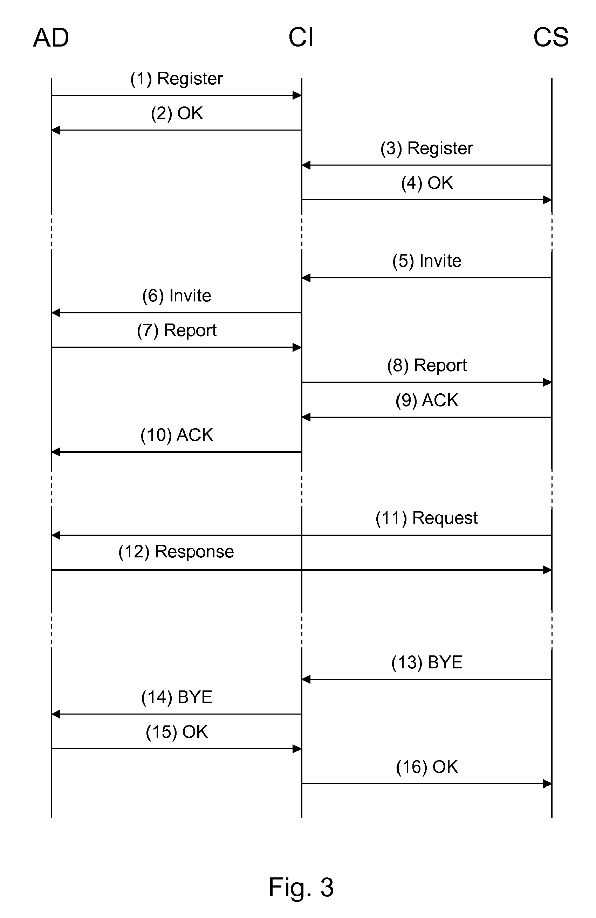

Figure 3 shows some typical sequences in a method for transferring information according to the invention.

The figure shows a diagram with data flows between an access device AD, the central instance CI, and the central station CS.

The access device AD represents either of the access devices of any of the consumers or the firewall assigned thereto, if any. Internal data flow between access devices, meters, and firewalls are not affected by the invention and therefore not considered here. Though the invention mainly deals with allowing secure communication ensured by the use of firewalls, it works without firewalls just as well, of course with reduced security.

The central instance CI in the above described example represents both, the SIP registrar, and the SIP proxy. Also here the internal data flow is not considered.

In order that an access device AD can be accessed by the central instance CI despite using a firewall, it first has to register there. Whenever an access device AD is starting its operation it first sends a message 1, Register, to the central instance CI. The central instance CI will confirm with a message 2, OK. This registering may be repeated from time to time, on a regular, or on a random basis, mainly to ensure the connection over a longer period of time.

Likewise and independent therefrom, the central station CS will be made known to the central instance CI by messages 3, Register, and 4, OK.

As a central station, like the central station CS in this example, normally is owned by a publicly acting company, there anyway is an Internet access via the homepage of this company. Such access of course could be used by the slave devices to contact the master device without the need to use the central instance CI.

During normal operation, triggered by the public utility company's central station CS the meter readings can be polled according to whatever timely scheme. To this end a message 5, Invite is sent from the central station CS to the central instance CI and is forwarded as a message 6, Invite, to the concerned access device AD. In a message 7, Report, the access device AD then will report the readings of the connected meters, or whatever is requested with the message 5, Invite, to the central instance CI, which will forward such report as a message 8, Report, to the central station CS. The central station CS may confirm the report with an acknowledging message 9, ACK, forwarded by the central instance CI as message 10, ACK.

The messages mentioned here are not identical to standardized SIP messages. Where appropriate such messages could be used as well. Maybe then more messages would be required to reach the same result.

It can also be provided for that the access device AD reports meter readings without being invited beforehand. Such "provision" for example could be part of a prior dialogue via the central instance CI or it could be foreseen in the operating software.

Likewise a command to change the operating condition of the connected devices can be transferred from the central station CS via the central instance CI to the access device AD. Such command may concern the switching off of the supply, the change of tariff, the setting of a reporting mode.

After a first dialog via the central instance CI both parties, central station CS, and access device AD, "know" one another and can communicate directly as shown with messages 11, Request, and 12, Response. This is only an alternative to further communications via the central instance CI using messages of the kind of messages 5 to 10 and may be used for example for longer communications like updating of the operation software in an access device AD from the central station CS.

Also a way to finalize the communications is shown with messages 13 to 16, where message 13, BYE, forwarded as message 14, BYE, is sent from the central station CS via the central instance CI to the access device AD and confirmed as message 15, OK, and message 16, OK.

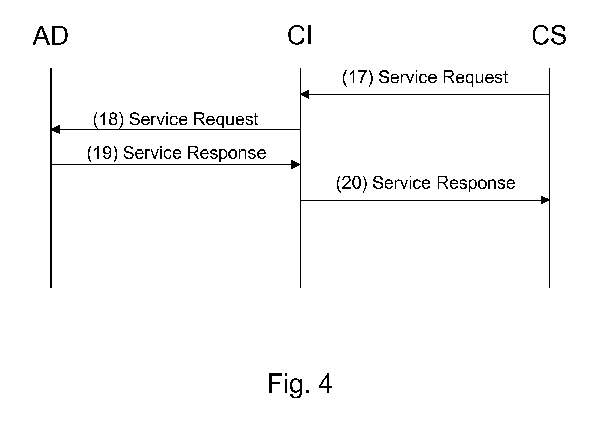

Figure 4 shows a further possibility of transferring information. A message 17, Service Request, is sent from the central station CS to the central instance CI including both, an "Invite" similar to message 5, and an immediate "BYE" like in the message 13. This message is forwarded as message 18, Service Request, from the central instance CI to the access device AD. It is answered by the access device AD by a message 19, Service Response, including both, a "Report" similar to message 7, and the "OK" like in the message 15. In a similar way a communication could start from the access device, turning to the central station CS via the central instance CI, and returning to the access device AD via the central instance CI. Such kind of information transfer is appropriate in cases where the amount of information is very low and otherwise the overhead, that is the amount of traffic necessary to open, manage and close a connection for information transfer, would be high compared to the information as such.

Thus a couple of possibilities is given for a secure transfer of information between a master and a slave device like the devices of a public utility company and the meters in their consumers' premises.

## Claims

1. Method for transferring information, especially control commands (Invite, Request, Service Request) or operational data (Report, Response, Service Response), between a master device and a slave device, especially the central station (CS) of a public utility company (PUV) and an access device (AD1, AD2, AD3; AD) of a consumer (C1, C2, C3), **characterized in, that** transferring information is performed with the aid of a publicly accessible communications network (PCN), that registration (Register) of the slave device (AD1, AD2, AD3; AD) with a central instance (CI) precede the transfer of information, and that the access of the master to the slave or of the slave to the master is performed with the aid of the central instance (CI) or based on information got from the central instance (CI).

2. Method according to claim 1, **characterized in, that** as the central instance a SIP proxy combined with a SIP registrar or a group of SIP proxies working together with at least one SIP registrar is used.

3. Method according to claim 1, **characterized in, that** the central instance (CI) mediates (Invite, Report, Service Request, Service Response) the transfer of information.

4. Method according to claim 1, **characterized in, that** the central instance (CI) mediates (Invite, Report) the establishment of a dialog between the master device (CS) and the slave device (AD1, AD2, AD3; AD), and that the transfer of information is performed independently (Request, Response) from the central instance (CI).

5. Method according to claim 1, **characterized in, that** the transfer of information together with an establishment of a connection for this purpose is performed by means of a single message (Service Request) leading via the central instance (CI).

6. System for transferring information, especially control commands (Invite, Request, Service Request) or operational data (Report, Response, Service Response), between a master device and a slave device, especially the central station (CS) of a public utility company (PUV) and an access device (AD1, AD2, AD3; AD) of a consumer (C1, C2, C3), **characterized in, that** the system includes a central instance (CI) and is adapted to transfer information using the method according to claim 1.

7. Master device (CS) for a system according to claim 6, **characterized in, that** it is adapted to transfer information to a slave device (AD1, AD2, AD3; AD) for a system according to claim 6 or to receive transferred information therefrom using the method according to claim 1.

8. Slave device (AD1, AD2, AD3; AD) for a system according to claim 6, **characterized in, that** it is adapted to transfer information to a master device (CS) for a system according to claim 6 or to receive transferred information therefrom using the method according to claim 1.

9. Central instance (CI) for a system according to claim 6, **characterized in, that** it is adapted to transfer information between a master device (CS) according to claim 7 and a slave device (AD1, AD2, AD3; AD) according to claim 8 using the method according to claim 1.

## Amended claims

### Amended claims in accordance with Rule 137(2) EPC.

**1.** Method for transferring information, like control commands (Invite, Request, Service Request) or operational data (Report, Response, Service Response), between a central station (CS) of a public utility company (PUV) and an access device (AD1, AD2, AD3; AD) of a consumer (C1, C2, C3), **characterized in, that** transferring information is performed with the aid of a publicly accessible communications network (PCN), that registration (Register) of the slave device (AD1, AD2, AD3; AD) with a central instance (CI) precede the transfer of information, and that the access of the central station (CS) to the access device (AD1, AD2, AD3; AD) or of the access device (AD1, AD2, AD3; AD) to the central station (CS) is performed with the aid of the central instance (CI) or based on information got from the central instance (CI).

**4.** Method according to claim 1, **characterized in, that** the central instance (CI) mediates (Invite, Report) the establishment of a dialog between the central station (CS) and the access device (AD1, AD2, AD3 ; AD), and that the transfer of information is performed independently (Request, Response) from the central instance (CI).

**6.** System for transferring information, like control commands (Invite, Request, Service Request) or operational data (Report, Response, Service Response), between a central station (CS) of a public utility company (PUV) and an access device (AD1, AD2, AD3 ; AD) of a consumer (C1, C2, C3), **characterized in, that** the system includes a central instance (CI) and is adapted to transfer information using the method according to claim 1.

**7.** Central station (CS) of a public utility company (PUV) for a system according to claim 6, **characterized in, that** it is adapted to transfer information to an access device (AD1, AD2, AD3; AD) of a consumer (C1, C2, C3) for a system according to claim 6 or to receive transferred information therefrom using the method according to claim 1.

**8.** Access device (AD1, AD2, AD3; AD) of a consumer (C1, C2, C3) for a system according to claim 6, **characterized in, that** it is adapted to transfer information to a central station (CS) of a public utility company (PUV) for a system according to claim 6 or to receive transferred information therefrom using the method according to claim 1.

**9.** Central instance (CI) for a system according to claim 6, **characterized in, that** it is adapted to transfer information between a central station (CS) of a public utility company (PUV) according to claim 7 and an Access device (AD1, AD2, AD3; AD) of a consumer (C1, C2, C3) according to claim 8 using the method according to claim 1.
